# EUROPÄISCHE PATENTSCHRIFT

(11) **EP 0 611 630 B1**
(45) Veröffentlichungstag und Bekanntmachung des Hinweises auf die Patenterteilung: **25.03.1998**
(21) Anmeldenummer: 93118343.8
(22) Anmeldetag: 12.11.1993
(51) Int. Cl.: B24B 3/00, B24B 27/00, B24B 41/00, B23Q 1/25

(54) **Numerisch gesteuerte Schleifmaschine zum Schleifen von vorzugsweise metallischen Werkstücken, insbesondere Werkzeugen**
NC grinding machine for matallic workpieces, especially tools
Rectifieuse à commande numérique pour pièces métalliques, en particulier des outils

(30) Priorität: 18.12.1992 DE 4242906
(43) Veröffentlichungstag der Anmeldung: 24.08.1994
(73) Patentinhaber: WALTER AG, D-72072 Tübingen (DE)
(72) Erfinder: Helle, Hans-Joachim, D-72074 Tübingen (DE); Nill, Adolf, D-72379 Hechingen (DE)
(74) Vertreter: Rüger, Rudolf, Dr.-Ing.

(56) Entgegenhaltungen:
- EP-A- 0 065 590
- WO-A-90/14196
- US-A- 2 118 304
- US-A- 4 617 764
- HANDBUCH DER FERTIGUNGSTECHNIK, 1979, MüNCHEN WIEN G.SPUR & AL. 'Spanen Band 3/1 u. 3/2'

## Beschreibung

Die Erfindung betrifft eine numerisch gesteuerte Schleifmaschine zum Schleifen von vorzugsweise metallischen Werkstücken, insbesondere Werkzeugen, gemäß Oberbegriff des Anspruchs 1.

Programmgesteuerte Schleifmaschinen zum Schleifen von rundlaufenden Werkstücken, beispielsweise Fräsern, Bohrern und Rundräumwerkzeugen, sowie von flachen Werkstücken, wie Drehmeiseln, Flachräumwerkzeugen, Stempeln, Sonderwerkzeugen mit und ohne Schneiden, sowie von anderen schleifbaren Fertigungsteilen erfordern eine hohe Flexibilität, um mit möglichst wenigen unterschiedlichen Aufspannungen des Werkstückes alle an diesem vorkommende Schleifvorgänge durchführen zu können. Bei bekannten Werkzeugschleifmaschinen, die für das Schleifen der genannten Werkstückpalette ausgelegt sind und von denen ein Beispiel in der EP-A1 0 072 887 beschrieben ist, sind durchweg in der sogenannten Säulenbauweise ausgeführt. Dabei ist auf einem im wesentlichen kastenförmigen Maschinenbett neben dem bezüglich mehrerer translatorischer und rotatorischer Achsen verstellbaren Werkstückträger eine vertikale Säule angeordnet, die wenigstens einen Schleifspindelträger trägt. Die Säule ist ihrerseits bezüglich des Werkstückträgers längs einer translatorischen Achse verstellbar; sie ist um eine Vertikalachse drehbar, wobei der jeweilige Schleifspindelträger an ihr widerum schwenkbar gelagert ist.

Diese Schleifmaschinen haben sich in der Praxis durchaus bewährt, doch bringen sie prinzipbedingt einen verhältnismäßig hohen technischen Aufwand mit sich. Für bestimmte Bearbeitungsvorgänge und Werkstücke macht sich auch eine gewisse Beengung des Freiraums für den Bearbeitungsbereich spürbar, die insbesondere von der mit Rücksicht auf die erforderliche Stabilität notwendigerweise einen beträchtlichen Durchmesser aufweisenden Säule, und den dadurch notwendigen langen Schleifspindelauskragungen, herrührt. Die Folge davon sind bei bestimmten Schleifvorgängen verhältnismäßig lange Verstellwege für die Schleifscheiben, um diese in die für die jeweilige Schleifoperation richtige räumliche Lage zu stellen. Aus diesem Erfordernis heraus ergeben sich auch verhältnismäßig große Schleifspindellängen, die schon mit Rücksicht auf den Platzbedarf und die Lagerverhältnisse unerwünscht sind.

Aus Spur: "Handbuch der Fertigungstechnik", Spanen, Band 3/1, Carl Hanser Verlag München Wien 1979, Seite 158, ist eine den Oberbegriff des Anspruchs 1 offenbarende Karussellschleifmaschine bekannt, die einen an einem Portal gelagerten Schleifkopf aufweist. Das Portal übergreift einen Tisch, auf dem ein Werkstück um eine Vertikalachse drehbar gelagert ist. Das offene Portal wird durch zwei seitliche Ständer gebildet, die durch einen Querträger miteinander verbunden sind. An dem Querträger ist ein Schleifkopf vertikal und horizontal verstellbar gelagert.

Solche Portalschleifmaschinen sind zum Schleifen von Werkzeugen nicht geeignet.

Aus Spur: "Handbuch der Fertigungstechnik", Spanen, Band 3/1, Carl Hanser Verlag München Wien 1979, Seite 183, Bild 82C ist außerdem eine Flachschleifmaschine bekannt, bei der eine Schleifscheibe an einer sogenannten festen Rahmensäule gehalten ist. Die Rahmensäule enthält einen sogenannten Spindelkasten, der in der Säule beweglich angeordnet ist. Der Spindelkasten ist dabei sowohl horizontal als auch vertikal in Richtung seiner Drehachse verschiebbar. Auf dem fest mit der Rahmensäule verbundenen Maschinenbett ist das flach zu schleifende Werkstück in einer Längsrichtung verschiebbar gelagert, die zu den Bewegungsrichtungen des Spindelstocks rechteckig steht.

Es handelt sich um eine Flachschleifmaschine in Säulen- jedoch nicht Portalbauweise.

Insbesondere im Großmaschinenbau sind daneben auch sogenannte Portalschleifmaschinen in verschiedenen Ausführungsformen bekannt, die vorzugsweise zu Flachschleifarbeiten an großen Werkstücken eingesetzt werden. Bei diesen Portalschleifmaschinen ist das Portal in der Regel relativ zu dem die Werkstückspannvorrichtung tragenden Maschinenbett verfahrbar, wobei Bedienplattformen und dergleichen vorgesehen sind, um die erforderliche Zugänglichkeit zu dem Werkstück und den Werkzeugen zu ermöglichen. Für die Bearbeitung verhältnismäßig kleiner Werkstücke und insbesondere von Werkzeugen mit ihren komplizierten Schneidengeometrien sind solche Maschinen weder bestimmt noch eingerichtet. Ein Beispiel für eine solche Portalschleifmaschine mit schleifscheiben-Wechselvorrichtung und begehbarer Bedienungsplattform in Höhe des Arbeitstisches ist in der DE-PS 35 32 903 beschrieben.

Aufgabe der Erfindung ist es, demgegenüber eine programmgesteuerte Schleifmaschine zum Schleifen kleinerer metallischer und nichtmetallischer Werkstücke, insbesondere Werkzeuge zu schaffen, die sich bei großen Arbeitsbereich und hoher Universalität durch kleinen Platzbedarf und hohe Steifigkeit bei gute dynamischen Eigenschaften und hoher Wirtschaftlichkeit auszeichnet. Nichtmetallische Werkstücke können z. Bsp. keramische Werkstücke aus Al₂O₃, Si₃N₄ o.a. sein.

Diese Aufgabe wird durch eine Schleifmaschine mit den Merkmalen des Anspruchs 1 gelöst.

Die beiden Ständer sind zweckmäßigerweise im Bereiche gegenüberliegender Seiten des Maschinenbettes angeordnet. Um ihre Steifigkeit zu erhöhen, können Sie zu der vorragenden Stirnseite des Maschinenbettes hin noch zusätzlich abgestützt sein. Dabei kann zwischen den beiden Ständern eine geschlossene verstärkende Rückwand vorgesehen sein, die zur weiteren Erhöhung der Steifigkeit beiträgt und aus diesem Grunde auch mit dem Maschinenbett starr verbunden sein kann. Die Rückwand bildet gleichzeitig einen dichten hinteren Abschluß des Arbeitsbereiches und zusammen mit einer zumindest den Schleifspindelträger und den Werkstückträger umschließenden Abdeckhaube, die mit dem Maschinenbett und/oder Portal verbunden ist und sich über das Maschinenbett erstreckt, läßt sich damit eine Kapselung der ganzen Maschine erreichen, wozu die Abdeckhaube gegen das Portal und das Maschinenbett abgedichtet sein kann, damit keine Schmierflüssigkeit austritt. Die Rückwand kann gewölbt sein, so daß sich insgesamt eine muschel- oder schalenförmige Gestalt des Postals mit den Ständern und der Rückwand ergibt, die zur Vorderseite hin sich öffnet.

Zur Erleichterung der allseitigen zugänglichkeit des Werkstückes und der Schleifscheiben ist das Maschinenbett mit Vorteil auf seiner vorragenden Stirnseite mit einem im wesentlichen teilkreisförmigen Umriß ausgebildet. Bei einem solchen Maschinenbett ergeben sich sehr einfache und auch ästhetisch ansprechende Bedingungen für die Abdeckhaube, wenn diese im wesentlichen glockenförmig oder teilzylindrisch ausgebildet ist.

Die neue Universalschleifmaschine gewährleistet einen großen Freiraum für den Bearbeitungsbereich und zeichnet sich durch kleine bewegte Massen mit kurzen Lagerüberständen für die Schleifspindel(n) aus. Insgesamt ist sie eine trotz des großen Arbeitsbereiches und der hohen Universalität sehr kleinbauende und steife Maschine. Wegen der kleinen Masse der bewegten Teile mit der im Vergleich zu Schleifmaschinen in der Säulenbauweise kürzeren Verstellwege und besseren Hebelverhältnisse ist diese Schleifmaschine dynamisch höher belastbar als dies bei der bisher üblichen Bauweise von Schleifmaschinen bei vergleichbarem Energiebedarf möglich war. Damit sind unproduktive Nebenzeiten kurzer, während die Wirtschaftlichkeit der Schleifmaschine insgesamt wesentlich erhöht ist.

Gleichzeitig erlaubt es die neue Bauweise, die Schleifscheibenaufnahmen an den Schleifspindeln und die Schleifspindellängen selbst auf mechanisch und geometrisch bedingte Mindestmaße zu begrenzen, so daß eben relativ kleine Verstellwege erforderlich sind, (im Prinzip das doppelte des Verkürzungsbetrages von Schleifscheibenaufnahme und Schleifspindel) um die Schleifscheiben in die für den jeweiligen Schleifvorgang richtige räumliche Lage zu bringen. Es ergibt sich ein weitgehend symmetrischer Maschinenaufbau, so daß z. Bsp. rechts- und linksspiralige Fräser, Bohrer usw. gleichrangig schleifbar sind.

Damit ist die ansich komplizierte Bearbeitung etwa von Radiusfräsern und Stufenwerkzeugen sehr einfach und kostengünstig, ohne daß dadurch größere Außenabmessungen der Schleifmaschine erforderlich wären.

In dem Portal können die Energie- und/oder Schmiermittelversorgungsleitungen für den Schleifspindelträger und dessen Spindelantrieb untergebracht sein, so daß sie außerhalb des Arbeitsraumes gegen Schmier- und Kühlmitteleinfluß geschützt sind und keine Behinderung im eigentlichen Arbeitsbereich ergeben.

Der Schleifspindelträger selbst kann abhängig von dem bevorzugten Einsatzzweck der Schleifmaschine ein- oder mehrspindelig ausgeführt sein. In einer bevorzugten Ausführungsform trägt er wenigstens einen Antriebsmotor, der mit zumindest einer Schleifspindel über einen Riementrieb gekuppelt ist, wobei der Riementrieb in einem geschlossenen Gehäuse angeordnet ist, in dessen Innenraum ein Luft-Überdruck gegenüber der Umgebung aufrecht erhaltbar ist. Praktisch wird dies derart erzielt, daß das Innengehäuse mit sogenannter Sperrluft beaufschlagt wird, die das Eindringen von Schmier- oder Kühlmittel und damit eine Beeinträchtigung des Schleifspindelantriebs verhindert. Aus Gründen einer kurzen Bauweise und einer gleichmäßigen Lagerbelastung ist es zweckmäßig, daß der Riementrieb mit der jeweiligen zweiseitig gelagerten Schleifspindel in einem Bereich zwischen den beiden Lagerstellen gekoppelt ist.

Der Schleifspindelträger ist an der Brücke des Portals zweckmäßigerweise über einen Support gelagert, der einen verstellbaren Schlitten trägt, durch welchen eine zweite Achse definiert ist und der eine dritte rechtwinklig zu der ersten und der zweiten Achse verlaufende sich zu der vorragenden Stirnseite des Maschinenbettes hin erstreckende dritte Achse definierende Lagermittel für den Schleifspindelträger aufweist, auf denen der Schleifspindelträger um die dritte Achse verschwenkbar gelagert ist.

Abhängig von der Zahl der in dem Schleifspindelträger enthaltenen Schleifspindeln kann wenigstens eine Schleifspindel mit ihrer Spindelachse diese dritte Achse schneiden oder im Abstand von dieser dritten Achse verlaufend angeordnet sein. Die Schleifspindelachsen selbst verlaufen in der Regel rechtwinklig zu der dritten Achse.

Die Ausbildung und Lagerung des Werkstückträgers hängt bis zu einem gewissen Grade von der Art und Geometrie der hauptsächlich zu bearbeitenden Werkstücke ab. Oft ist es vorteilhaft, wenn der Werkstückträger auf einem Lagerelement links einer vierten Achse rechtwinklig zu der ersten und der zweiten Achse auf dem Maschinenbett verstellbar gelagert ist. Dabei können die Verstellmöglichkeiten des Werkstückträgers dadurch noch weiter erhöht werden, daß er auf dem Lagerelement mittels eines eine fünfte vertikale Achse definierten Drehtisches und - gegebenenfalls zusätzlich - mittels eines zwei rechtwinklig zueinanderstehende weitere sechste und siebte Achsen definierenden Kreuzschlittens gelagert ist. Schließlich ist es für die Bearbeitung rundlaufender Werkstücke von Vorteil, wenn der Werkstückträger eine Werkstückspannvorrichtung aufweist, die um eine achte Achse, die Werkstückrotationsachse drehbar ist.

In der Zeichnung sind Ausführungsbeispiele des Gegenstandes der Erfindung dargestellt. Es zeigen:
Fig. 1 eine Schleifmaschine gemäß der Erfindung in schematischer perspektivischer Darstellung, für die Auslegung, mit bis zu 6 gesteuerten NC-Achsen.
Fig. 2 einen Ausschnitt aus der Schleifmaschine nach Fig. 1 in der Ausbaustufe für max. 8 gesteuerte NC-Achsen zur Veranschaulichung der Ausrichtung und gegenseitigen Zuordnung der einzelnen translatorischen und rotatorischen Verstellachsen des Schleifspindelträgers und des Werkstückträgers der Schleifmaschine, in perspektivischer Darstellung und in einem anderen Maßstab,
Fig. 3 den Schleifspindelträger der Schleifmaschine nach Fig. 1 in einer Seitenansicht im Ausschnitt und in einem anderen Maßstab und
Fig. 4 die Schleifmaschine nach Fig. 1 in einer abgewandelten Ausführungsform, in einer entsprechenden Darstellung.

Die Schleifmaschine weist ein kastenförmiges Maschinenbett 1 auf, das entweder als Gußteil beispielsweise aus Grauguß oder als Schweißkonstruktion hergestellt ist, und das in der Draufsicht im wesentlichen teilkreis- oder teilovalförmig gestaltet ist. Eine entsprechend gekrümmte teilzylindrische Mantelwand 2 geht von einer ebenen Rückseite 3 aus; sie ist bei 4 als hochstehender Bord über eine im wesentlichen ebene oder leicht trichterförmige vertiefte Deckwand 5 hochgezogen und reicht anschließend an die Rückseite 3 bei 6 bis zu der Aufstellfläche der Maschine hinab. Auf der der Rückseite 3 gegenüberliegenden Vorder- oder Bedienseite der Schleifmaschine ist die Mantelwand 2 unten bei 7 kegelförmig zurückgesetzt, um damit einen freien Fußraum für eine an der Bedienungsseite vor der Schleifmaschine stehende Bedienungsperson zu schaffen. Ein in diesem Bereich angeordneter Aufstellfuß ist mit 8 bezeichnet. Beidseitig vom Aufstellfuß sind rechteckige Transportaussparungen für Gabelstapler vorgesehen.

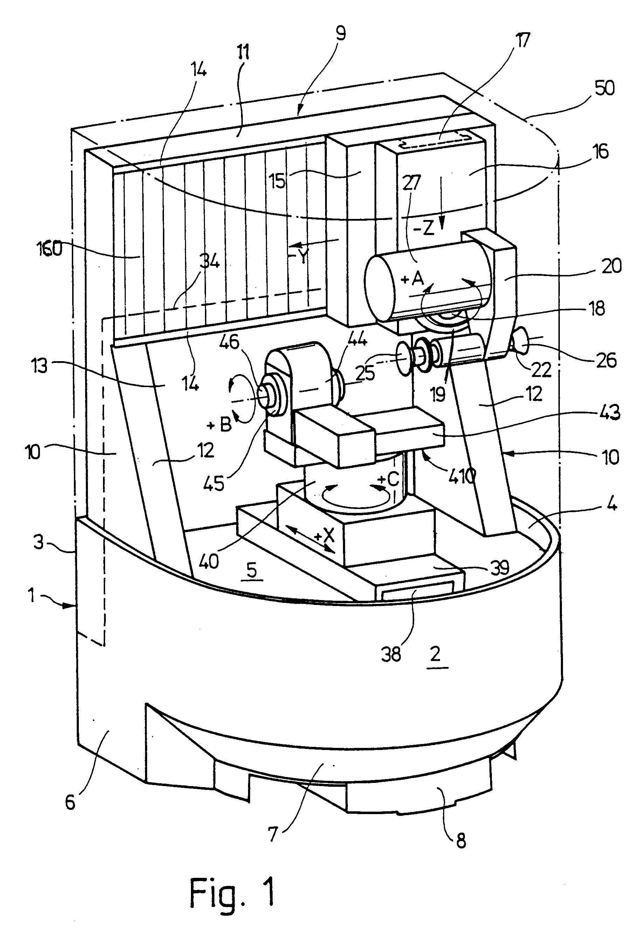

Auf das Maschinenbett 1 ist mit dessen ebener Rückseite 3 fluchtend ein im wesentlichen U-förmiges Portal 9 aufgesetzt, das aus zwei vertikalen Ständern 10 und einer diese miteinander verbindenden, im Abstand oberhalb des Maschinenbettes 2 verlaufenden Brücke 11 besteht, die balken- oder trägerförmig mit im wesentlichen rechteckiger Querschnittsgestalt ausgebildet ist. Die beiden Ständer 10 sind in der aus Fig. 1 ersichtlichen Weise im Bereiche gegenüberliegender Seiten des Maschinenbettes 1 angeordnet, derart, daß das Maschinenbett 1 von dem Portal 9 aus einseitig vorragend ausgebildet ist. Sie sind in der Seitenansicht etwa dreieckförmig und durch schräg verlaufende Gurte 12 zu der vorragenden Stirnseite des Maschinenbettes, d. h. der Bedienungsseite hin abgestützt. Zwischen den beiden Ständern 10 ist eine geschlossene versteifende ebene oder schalenförmige gekrümmte Rückwand 13 angeordnet, die den von den beiden Ständer 10, der Brücke 11 und der Deckwand 5 des Maschinenbettes 2 umschlossenen Raum nach hinten zu abgedichtet abschließt. Die Rückwand 13 ist mit der Brücke 11 und den Ständern 10, sowie mit dem Maschinenbett 2 starr verbunden und bildet gleichzeitig eine Versteifung für das Portal 9.

Das verwindungssteife Portal 9 kann ein- oder mehrteilig, gegebenenfalls in Kastenbauweise als Schweiß- oder Gußkonstruktion hergestellt und mit dem Maschinenbett 2 beispielsweise durch Verschrauben starr verbunden sein. Alternativ können aber das Maschinenbett 2 und das Portal 9 auch ein einteiliges Gußstück sein.

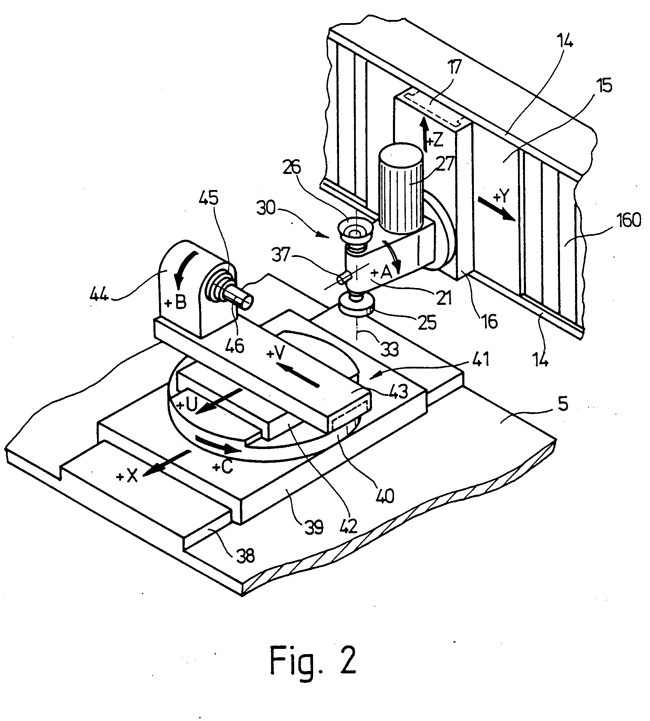

An der dem vorragenden Maschinenbett 2 zugewandten Vorderseite trägt die Brücke 11 eine bei 14 in Fig. 1 angedeutete horizontale Längsführung auf der ein Support 15 längs einer ersten horizontalen Achse, der Linearachse - y, längsverschieblich gelagert ist. Die Längsführung 14 kann in üblicher Weise durch einen Balg 160 (Fig. 1 und 2) abgedeckt sein.

Auf dem Support 15 ist ein Vertikalschlitten 16 über eine bei 17 angedeutete Linearführung längs einer zweiten Achse, der Linearachse -z, längsverschieblich geführt. Die Linarachse -z verläuft rechtwinklig zu der horizontalen Linarache -y; sie ist somit vertikal ausgerichtet.

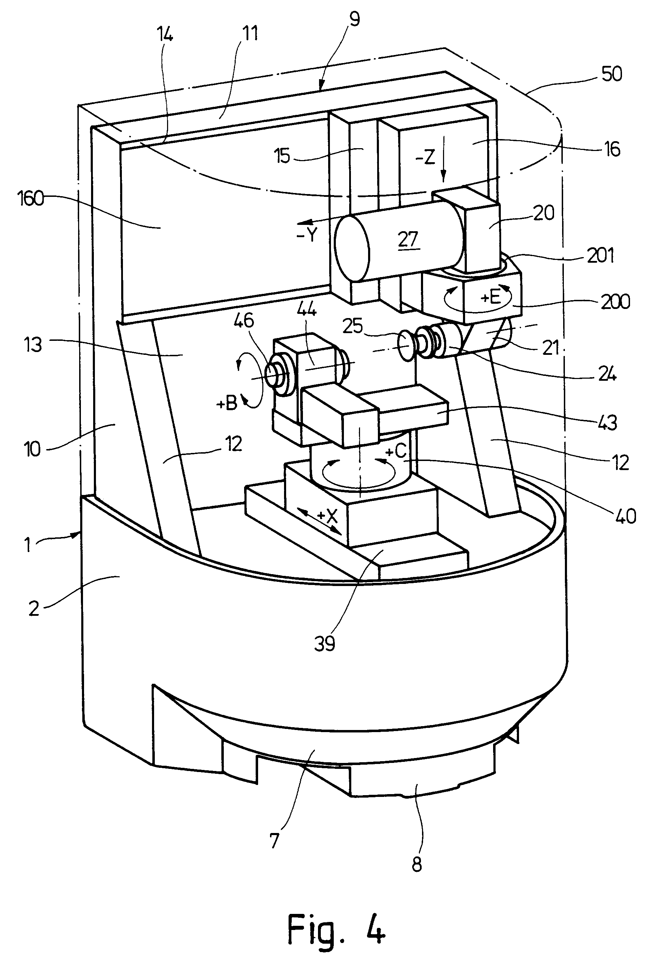

Auf der Vorderseite des Vertikalschlittens 16 ist ein zu der vorragenden Stirnseite des Maschinenbettes 2 hinweisender horizontal zylindrischer Lagerzapfen 18 angeordnet, auf dem bei 19 ein Schleifspindelträger 20 schwenkbar gelagert ist. Der Lagerzapfen 18 definiert eine horizontale, sich im Abstand oberhalb des Maschinenbettes 2 erstreckende dritte Achse, die Rotationsachse + A, um die der Schleifspindelträger 20 über einen Schwenkbereich bis zu 360° verschwenkbar ist. Alternativ oder zusätzlich hierzu ist statt der horizontalen Schwenkachse auch eine vertikale Ausrichtung der A-Achse am Vertikalschlitten möglich, wie dies in Fig. 4 veranschaulicht ist.

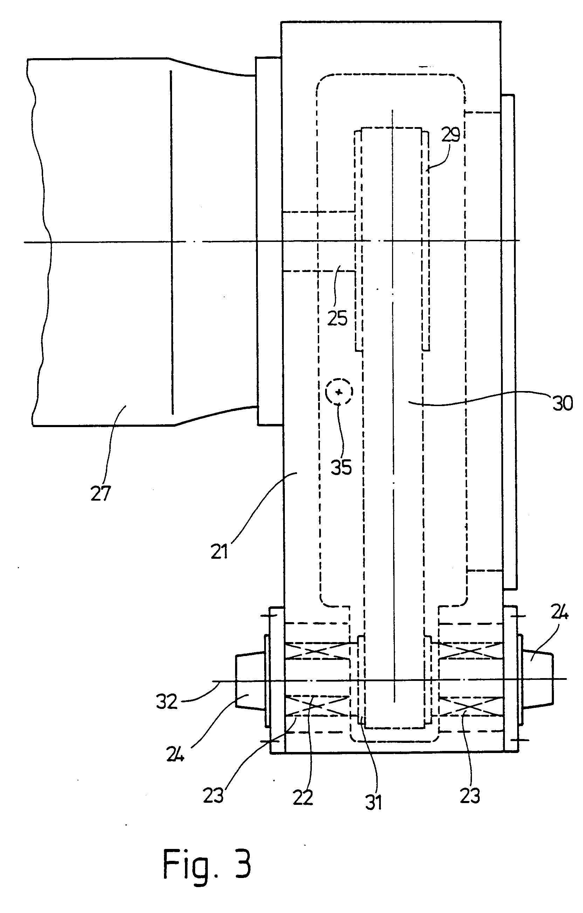

Der Schleifspindelträger 20 kann ein- oder mehrspindlig ausgebildet sein. Er weist ein längliches Gehäuse 21 (Fig. 3) auf, in dem wenigstens eine Schleifspindel 22 in zwei beabstandeten Lagerstellen 23 drehbar gelagert ist. Die Schleifspindel 22 trägt an beiden Seiten über das Gehäuse 24 vorstehende Schleifscheibenaufnahmen 24, auf die für den jeweiligen Einsatzzweck geeignete Schleifscheiben 25, 26 (Fig. 2) aufgesetzt sind.

Anstelle der in den Figuren veranschaulichten einen Schleifspindel 22 können in dem Gehäuse auch mehrere, insbesondere zwei achsparallele Schleifspindeln in entsprechender Weise gelagert sein.

Alle Schleifspindeln 22 werden von einem oder zwei Elektromotoren angetrieben, der bzw. die an dem für alle Schleifspindeln gemeinsamen Gehäuse 21 angeflanscht ist bzw. sind. Bei dem dargestellten Ausführungsbeispiel ist lediglich ein Elektromotor 27 vorgesehen. Auf seine Welle 28 (Fig. 3) ist eine Flach- oder Zahnriemenscheibe 29 aufgesetzt, die über einen Flach- oder Zahnriemen 30 und einer Flach- oder Zahnriemenscheibe 31 die Schleifspindel 22 antreibt. Aus Gründen einer kurzen Bauweise und zur Erzielung einer gleichmäßigen Lagerbelastung liegt die FLach- oder Zahnriemenscheibe 31 zwischen den beiden Lagerstellen 23.

Jede Schleifspindel 22 ist mit ihrer Spindelachse 32 (Fig. 3) rechtwinklig zu der Rotationsachse + A ausgerichtet, wobei in Abhängigkeit von der Schleifspindelanzahl der Abstand zu der Rotationsachse + A 0 oder > 0 sein kann. In dem vorliegenden Fall schneidet die Schleifspindelachse 32 die Rotationsachse + A, wie dies aus Fig. 2 zu entnehmen ist.

Der Support 15, der Vertikalschlitten 16 und der Schleifspindelträger 20 sind mit geeigneten Stellantrieben gekoppelt, die ansich bekannt und deshalb in der Zeichnung nicht weiter dargestellt sind. Diese Stellantriebe erlauben es, dem Support 15, dem Vertikalschlitten 16 und dem Schleifspindelträger 20 programmgesteuert jeweils eine entsprechende Stellbewegung längs der Linearachsen - y und - z, sowie eine Schwenkbewegung um die Rotationsachse + A zu erteilen. Die gesamten elektrischen Anschlußleitungen dieser Stellantriebe und des Antriebsmotors 27 bzw. der Antriebsmotoren 27 verlaufen ebenso wie die Kühlmittel- und Schmiermittelleitungen und gegebenenfalls vorhandene Druckluftleitungen durch die Ständer 10 und die Brücke 11 des Joches, wobei die Vorsorgungsleitungen für den Schleifspindelträger 20 durch den als Hohlzapfen ausgebildeten Lagerzapfen 18 gehen. Dies ist in Fig. 1 bei 34 angedeutet.

An dem Gehäuse 21 ist ein Sperrluftanschluß 35 (Fig. 3) vorgesehen, der über eine entsprechende Druckluftleitung eine Beaufschlagung des Gehäuseinnenraums mit einem Luftüberdruck gegenüber der Umgebung gestattet, um damit das Eindringen von Kühlemulsion und Kühlölen in das Gehäuse zu verhindern und damit eine Beeinträchtigung der Funktionsweise des Schleifspindelantriebs zu verhüten. Auf diese Weise wird der gesamte Antriebstrakt bestehend aus dem Antriebsmotor 27, dem Riemenantrieb 29 - 31 und den Schleifspindeln 22 mit deren Lagern 23 wirksam geschützt.

An der Vorderseite des Schleifspindelträgers 20 ist in der aus Fig. 2 ersichtlichen Weise ein Meßtaster 37 oder ein anderes geeignetes Meßinstrument befestigt, mit dem die Lage der beschriebenen Maschinenachsen und des zu bearbeitenden Werkstücks zu einem gemeinsamen Referenzpunkt ermittelt wird. Mit diesen Daten ist die räumliche Lage der Maschinenachse zum zu bearbeitenden Werkstück weitgehend bekannt. Zusammen mit den Geometriedaten der Schleifscheiben 25, 26 kann dann der die Verstellantriebe steuerende Mikroprozessor so programmiert werden, daß er vor jedem Schleifablauf die Schleifscheiben automatisch richtig positioniert und nachstellt (Nullpunktbearbeitung).

Mittig zwischen den beiden Ständern 10 und rechtwinklig zu der ebenen Rückseite 3 des Maschinenbettes 2 verlaufend ist auf der Deckwand 5 des Maschinenbettes 2 eine Längsführung 38 angeordnet, die etwa von der Rückseite 3 bis zu der vorragenden Stirnseite des Maschinenbettes 2 sich erstreckt und auf der ein Lagerelement in Gestalt eines Schlittens 39 längs einer vierten Achse, der Linearachse + x', verschieblich gelagert ist. Die Linearachse + x', verläuft rechtwinklig zu den Linearachsen - y und - z, sowie parallel zu der Rotationsachse + A.

Auf dem Schlitten 39 ist ein Rundtisch 40 um eine fünfte Achse, die vertikale Rotationsachse + C drehbar gelagert. Auf ihm sitzt - bei Fig. 1 (kleine Maschine) ein Obertisch 410, bei Fig. 2 (große Maschine) - ein Kreuzschlitten 41, dessen Längsschlitten 42 längs einer sechsten Achse, der Linearachse + U', verstellbar ist, die in einer Horizontalebene liegt. Der Obertisch 410 (Fig. 1) ist entweder mit dem Rundtisch 40, d.h. der C-Achse oder - wenn diese entfällt - mit dem Schlitten 39 fest verbunden.

Der Querschlitten 43 des Kreuzschlittens 41 ist auf dem Längsschlitten 42 längs einer siebten Achse, der Linearachse + V', verstellbar, die in einer Horizontalebene liegend rechtwinklig zu der Linearachse + U', verläuft, welche durch den Längsschlitten 42 definiert ist. Grundsätzlich ist es auch denkbar, den Querschlitten 43 relativ zu dem Längsschlitten 42 verdrehbar auszubilden.

Auf dem Obertisch 410 bzw. dem Querschlitten 43 schließlich sitzt ein Werkstückträger 44, der eine Werkstückspannvorrichtung 45 in Gestalt eines Spannfutters 45 aufweist, in das ein bei 46 dargestelltes rundlaufendes Werkstück beispielsweise ein Bohrer oder Fräser eingespannt ist. Das Spannfutter 45 ist in dem Werkstückträger 44 um eine horizontale achte Achse, die Rotationsachse + B drehbar gelagert. Diese Werkstückrotationsachse ist für hohe Schrittgenauigkeit beim Schleifen von Teilungen (Auflösung <= 0,001)° und hohe Drehzahl >= 300 U/min für das Rundschleifen ausgelegt. Auf den Obertisch 410 bzw. den Querschnitten 43 können auch weitere Werkstücksträgerelemente wie Lünetten, ein Reitstock und dergleichen, sowie eine Abrichtvorrichtung angeordnet sein. Die Anordnung ist derart getroffen, daß der Rundtisch 40 eine von der Rückwand 14 und den Ständern 12 unbehinderte Verdrehung des Werkstückträgers 44 um 360° um die +C-Achse erlaubt.

Die elektrischen Stellantriebe für den Schlitten 39, den Rundtisch 40 und den Längs- und Querschlitten des Kreuzschlittens 41, sowie für das Spannfutter 45 sind bekannt und in der Zeichnung nicht weiter dargestellt. Ihre Stromversorgung erfolgt von dem Inneren des Maschinenbetts 2 aus, durch einen hohlen Lagerzapfen des Rundtisches 40, der ebenfalls nicht weiter veranschaulicht ist. Werden auf dem Querschlitten 43 Lünetten und ein Reitstock angeordnet, so können auch diese Teile automatisch verstellbar ausgebildet sein, wie die Abrichtrolle der Abrichteinrichtung für programmgesteuertes Abrichten ausgelegt werden kann.

Die beschriebene Schleifmaschine kann abhängig von ihrem jeweiligen Einsatzzweck mit vier, fünf, sechs, sieben oder acht programmgesteuerten Achsen gefertigt werden. In der niedersten Ausbaustufe der Maschine mit vier programmgesteuerten Achsen (- y, - z, + B x') kann für das Schleifen von Spiralsteigungen an dem Werkstück 46 der Schleifspindelträger 20 um die Rotationsachse + A manuell verstellbar ausgebildet sein.

In der höchsten Ausbaustufe (Fig. 3) sind die in einem Koordinatensystem nach DIN 66 217 einander zugeordneten translatorischen Hauptachsen, die Linarachsen X' Y, Z mit den Nebenachsen + U', + V', sowie die rotatorischen Hauptachsen A, B, C sowie gegebenenfalls E vorhanden.

Mit der beschriebenen Anordnung der Hauptachsen können die Schleifspindeln 22 in jede räumliche Schleifposition geschwenkt werden, so daß ähnlich wie in einem kardanischen System theoretisch jede Schneidenlage und die kompliziertesten Formen am Werkstück 46 schleifbar sind.

Die in Fig. 4 dargestellte abgewandelte Ausführungsform der neuen Schleifmaschine entspricht in allen wesentlichen Merkmalen der Ausführungsform nach Fig. 1. Gleiche Teile sind deshalb mit gleichen Bezugszeichen versehen und nicht nochmals erläutert. Außerdem ist die Zeichnung etwas vereinfacht.

Während bei der Ausführungsform nach Fig. 1 der Schleifspindelträger 20 an dem Vertikalsupport 16 um die horizontale + A-Achse verschwenkbar gelagert ist, ist bei der Ausführungsform nach Fig. 4 die Anordnung derart getroffen, daß der Schleifspindelträger 20 um eine vertikale Achse +E um 180° verschwenkbar ist, die im Abstand vor dem Vertikalschlitten 16 verläuft. Zu diesem Zwecke ist an dem Vertikalschlitten 16 eine gehäuseartiger Lagerbock 200 zur Maschinenvorderseite hin vorkragend angeordnet, der ein bei 201 angedeutetes Schwenklager für den Schleifspindelträger 20 enthält, welches die +E-Achse definiert. Der Schleifspindelträger 20 liegt mit einem den Antriebsmotor 27 tragenden Teil in der aus Fig. 4 ersichtlichen Weise oberhalb des plattenartigen Lagerbockes 200, während sein die Schleifspindel lagernder Teil 21 unterhalb des Lagerbockes 200 vorragt.

Der Lagerbock 200 selbst kann an dem Vertikalschlitten 16 starr befestigt sein. Es sind aber auch Ausführungsformen denkbar, bei denen der Lagerbock 200 mittels eines den Teilen 18, 19 der Fig. 1 entsprechenden Lagers an dem Vertikalschlitten 16 um die horizontale +A-Achse schwenkbar gelagert ist. Damit ergeben sich noch weitere Verstellmöglichkeiten der Schleifscheiben 25, 26 im Raum.

Ähnlich wie bei der Ausführungsform nach Fig. 1 ist auch bei der Ausführungsform nach Fig. 4 der Rundtisch 40 des Werkstückträgers um die +C-Achse um 360° schwenkbar. Der Abstand der Ständer 12 und der Rückwand 13 ist so gewählt, daß zumindest innerhalb des normalen Bearbeitungsbereiches diese Drehbewegung des Rundtisches 40 und der darauf angeordneten Elemente nicht behindert ist. Auf diese Weise ist es möglich, das Werkstück 46 ohne Veränderung der Einspannung durch einfaches Verschwenken in Bearbeitungspositionen zu bringen, in denen eine Bearbeitung beidseitig der Längsachse möglich ist.

Da alle Zuleitungen für Elektrik, Pneumatik, Schmierung und Kühlung außerhalb des unmittelbaren Naßraumes verlegt sind, ist der Arbeitsraum von allen kollisionsgefährdeten Zuleitungen freigehalten, womit die Störanfälligkeit weitgehend eingeschränkt ist.

Die Schleifmaschine kann auch in einfacher Weise voll gekapselt werden, in dem eine im wesentlichen glocken- oder teilzylinderförmige Abdeckhaube 50 (Fig. 1), die aus Blech mit Sichtfenstern oder aus durchsichtigem Kunststoffmaterial bestehen kann auf das Maschinenbett 2 dessen Umriß folgend abgedichtet aufgesetzt und sodann befestigt wird. Diese Abdeckhaube 50 ist eine komplett vorgefertigte Baugruppe, die gegebenenfalls auch mit Türen versehen sein kann. Die Anordnung kann dabei auch derart getroffen sein, daß die Abdeckhaube rückseitig abgedichtet an dem Portal 9 befestigt ist, während sie im übrigen auf dem Bord 4 des Maschinenbettes 2 abgedichtet aufsitzt.

## Patentansprüche

1. Numerisch gesteuerte Schleifmaschine zum Schleifen von vorzugsweise metallischen Werkstücken, insbesondere Werkzeugen, mit einem Maschinenbett, mit einem Schleifkopf, der wenigstens eine angetriebene und endseitig wenigstens eine Schleifscheibe tragende Schleifspindel aufweist und der über zugeordnete Lager- und Führungsmittel relativ zu dem Maschinenbett zumindest längs zweier rechtwinklig aufeinander stehender Achsen verstellbar ist, und mit einem Werkstückträger, der auf dem Maschinenbett im Wirkungsbereich der Schleifscheibe(n) des Schleifspindelträgers angeordnet ist, wobei dem Schleifspindelträger und/oder dem Werkstückträger programmgesteuerte, ihm Stellbewegungen in Form von Längsbewegungen bezüglich der einzelnen Achsen erteilende Stellvorrichtungen zugeordnet sind, mit dem Maschinenbett (2) ein Portal (9) fest verbunden ist, das zwei seitliche Ständer (10) und eine im Abstand oberhalb des Maschinenbettes (2) verlaufende horizontale Brücke (11) aufweist, an der der Schleifspindelträger (20) längs einer ersten Achse (- y) verstellbar gelagert ist, und wobei das Maschinenbett (2) von dem Portal (9) einseitig vorragend ausgebildet ist,
dadurch gekennzeichnet, daß zwischen den beiden Ständern (10) eine geschlossene versteifende Rückwand (13) angeordnet ist, so daß ein verwindungsteifes Portal ausgebildet ist, und
daß der Werkstückträger (44) zumindest Längs einer Achse (+ X') verstellbar gelagert ist.

2. Schleifmaschine nach Anspruch 1, dadurch gekennzeichnet, daß der Schleifkopf um wenigstens eine Achse verschwenkbar ist.

3. Schleifmaschinen nach Anspruch 1, dadurch gekennzeichnet, daß die beiden Ständer (10) im Bereiche einander gegenüberliegender Seiten des Maschinenbettes (2) angeordnet sind.

4. Schleifmaschinen nach Anspruch 1 oder 3, dadurch gekennzeichnet, daß die beiden Ständer (10) zu der vorragenden Stirnseite des Maschinenbettes (2) hin abgestützt sind.

5. Schleifmaschine nach Anspruch 4, dadurch gekennzeichnet, daß die Rückwand (13) auch mit dem Maschinenbett (2) starr verbunden ist.

6. Schleifmaschine nach einem der vorgehenden Ansprüche dadurch gekennzeichnet, daß das Maschinenbett (2) auf seiner vorragenden Stirnseite mit einem im wesentlichen teilkreisförmigen Umriß ausgebildet ist.

7. Schleifmaschine nach einem der vorgehenden Ansprüche, dadurch gekennzeichnet, daß sie eine zumindest den Schleifspindelträger (20) und den Werkstückträger (44) umschließende Abdeckhaube (50) aufweist, die mit dem Maschinenbett (2) und/oder dem Portal (9) verbunden ist und sich über das Maschinenbett (2) erstreckt.

8. Schleifmaschine nach Anspruch 6 dadurch gekennzeichnet, daß die Abdeckhaube (50) gegen das Maschinenbett (2) und/oder das Portal (9) abgedichtet ist.

9. Schleifmaschine nach Anspruch 6 oder 7, dadurch gekennzeichnet, daß die Abdeckhaube (50) im wesentlichen glocken- oder teilzylinderförmig ausgebildet ist.

10. Schleifmaschine nach einem der vorhergehenden Ansprüche dadurch gekennzeichnet, daß in dem Portal (9) Energie- und/oder Schmier- und/oder Kühlmittelversorgungsleitungen (34) für den Schleifspindelträger (20) und dessen Spindelantrieb untergebracht sind.

11. Schleifmaschinen nach einem der vorhergehenden Ansprüche dadurch gekennzeichnet, daß der Schleifspindelträger (20) wenigstens einen Antriebsmotor (27) trägt, der mit zumindest einer Schleifspindel (22) über einen Riementrieb (30, 31, 32) gekuppelt ist, und daß der Riementrieb in einem geschlossenen Gehäuse (21) angeordnet ist, in dessen Innenraum ein Luftüberdruck gegenüber der Umgebung aufrecht erhaltbar ist.

12. Schleifmaschinen nach Anspruch 10, dadurch gekennzeichnet, daß der Riementrieb mit der zweiseitig gelagerten Schleifspindel (22) in einem Bereich zwischen den beiden Lagerstellen (23) gekuppelt ist.

13. Schleifmaschine nach einem der vorhergehenden Ansprüche, dadurch gekennzeichnet, daß der Schleifspindelträger (20) an der Brücke (11) über einen Support (15) gelagert ist, der einen verstellbaren Schlitten (16) trägt, durch den eine zweite Achse (-z) definiert ist und der eine dritte, vorzugsweise rechtwinklig zu der ersten (- y) und der zweiten (-z) Achse verlaufende, sich zur vorragenden Stirnseite des Maschinenbetts (2) hin erstreckende dritte Achse (+ A) definierende Lagermittel (18, 19) für den Schleifspindelträger (20) aufweist, auf denen der Schleifspindelträger um die dritte Achse (+ A) verschwenkbar gelagert ist.

14. Schleifmaschine nach Anspruch 13, dadurch gekennzeichnet, daß wenigstens eine Schleifspindel (22) mit ihrer Spindelachse (32) die dritte Achse (+ A) schneidet.

15. Schleifmaschine nach Anspruch 13 oder 14, dadurch gekennzeichnet, daß wenigstens eine Schleifspindel (22) mit ihrer Spindelachse (32) im Abstand von der dritten Achse (+ A) verlaufend angeordnet ist.

16. Schleifmaschine nach Anspruch 13, dadurch gekennzeichnet, daß die Lagermittel (18) als Hohlachse ausgebildet sind.

17. Schleifmaschine nach einem der vorhergehenden Ansprüche, dadurch gekennzeichnet, daß der Werkstückträger (44) auf einem Lagerelement (39) längs einer vierten Achse (+ x') rechtwinklig zu der ersten (-y) und der zweiten (- z) Achse auf dem Maschinenbett (2) verstellbar gelagert ist.

18. Schleifmaschine nach Anspruch 17, dadurch gekennzeichnet, daß der Werkstückträger (44) auf dem Lagerelement (39) mittels eines eine fünfte vertikale Achse (+ V') definierenden Drehtisches (40) gelagert ist.

19. Schleifmaschine nach Anspruch 17 oder 18, dadurch gekennzeichnet, daß der Werkstückträger (44) auf dem Lagerelement (39) mittels eines zwei rechtwinklig zueinander stehende sechste und siebte Achsen (+ U'; + V') definierenden Kreuzschlittens (41) gelagert ist.

20. Schleifmaschine nach einem der vorhergehenden Ansprüche, dadurch gekennzeichnet, daß der Werkstückträger (44) eine Werkstückspannvorrichtung (45) aufweist, die um eine achte Achse (+ B), die Werkstückrotationsachse, drehbar ist.

21. Schleifmaschine nach einem der vorhergehenden Ansprüche, dadurch gekennzeichnet, daß der Schleifspindelträger (20) an der Brücke (11) über einen Support (15) gelagert ist, der einen verstellbaren Schlitten (16) trägt, durch den eine zweite Achse (-Z) definiert ist und der Lagermittel (200) für den Schleifspindelträger (20) aufweist, auf denen der Schleifspindelträger um eine weitere Achse (+E) verschwenkbar gelagert ist, die sich vorzugsweise parallel zu der zweiten Achse (-Z) erstreckt.

## Claims

1. Numerically controlled grinding machine preferably for grinding metal work pieces, in particular tools, with a machine bench, with a grinding head, which has at least one driven grinding spindle having at least one grinding wheel at its end and which may be displaced via allocated bearing and guide means relative to the machine bench at least along two axes standing at right angles to one another, and with a work piece support, which is arranged on the machine bench in the active region of the grinding wheel(s) of the grinding spindle support, whereby the grinding spindle support and/or work piece support are allocated program-controlled control devices imparting to it control movements in the form of longitudinal movements relative to the individual axes, and a portal (9) is firmly connected to the machine bench (2), said portal having two lateral stands (10) and a horizontal bridge (11), which extends at a distance above the machine bench (2) and on which the grinding spindle support (20) is mounted to be displaceable along a first axis (- y), and whereby the machine bench (2) is constructed to protrude from the portal (9) on one side, characterised in that a closed reinforcing rear wall (13) is arranged between the two stands (10), so that a torsion-resistant portal (9) is formed, and that the work piece support (44) is mounted to be displaceable at least along one axis (+ X').

2. Grinding machine according to Claim 1, characterised in that the grinding head may be swivelled around at least one axis.

3. Grinding machines according to Claim 1, characterised in that the two stands (10) are arranged in the region of opposing sides of the machine bench (2).

4. Grinding machines according to Claim 1 or 3, characterised in that the two stands (10) are supported towards the protruding face side of the machine bench (2).

5. Grinding machine according to Claim 4, characterised in that the rear wall (13) is also rigidly connected to the machine bench (2).

6. Grinding machine according to one of the preceding claims, characterised in that the machine bench (2) is provided on its protruding face side with a contour essentially in the shape of a part-circle.

7. Grinding machine according to one of the preceding claims, characterised in that it has a covering hood (50) enclosing at least the grinding spindle support (20) and the work piece support (44), said hood being connected to the machine bench (2) and/or the portal (9) and extending over the machine bench (2).

8. Grinding machine according to Claim 6, characterised in that the covering hood (50) is sealed in relation to the machine bench (2) and/or the portal (9).

9. Grinding machine according to Claim 6 or 7, characterised in that the covering hood (50) is essentially constructed in a bell or part-cylinder shape.

10. Grinding machine according to one of the preceding claims, characterised in that lines (34) for the supply of energy medium and/or lubricant and/or coolant for the grinding spindle support (20) and its spindle drive are housed in the portal (9).

11. Grinding machines according to one of the preceding claims, characterised in that the grinding spindle support (20) bears at least one drive motor (27), which is coupled with at least one grinding spindle (22) via a belt drive (30, 31, 32); and that the belt drive is arranged in a closed housing (21), in the interior of which an excess pressure of the air in relation to the environment may be maintained.

12. Grinding machines according to Claim 10, characterised in that the belt drive is coupled with the grinding spindle (22) mounted on two sides in a region between the two bearing points (23).

13. Grinding machine according to one of the preceding claims, characterised in that the grinding spindle support (20) is mounted on the bridge (11) via a support (15), which bears a displaceable cradle (16), through which a second axis (- z) is defined and which has bearing means (18, 19) for the grinding spindle support (20) defining a third axis (+ A), which preferably runs at right angles to the first (- y) and the second (- z) axis and extends towards the protruding face side of the machine bench (2), the grinding spindle support being mounted on said bearing means to swivel around the third axis (+ A).

14. Grinding machine according to Claim 13, characterised in that at least one grinding spindle (22) intersects the third axis (+ A) with its spindle axis (32).

15. Grinding machine according to Claim 13 or 14, characterised in that at least one grinding spindle (22) is arranged with its spindle axis (32) to run at a distance from the third axis (+ A).

16. Grinding machine according to Claim 13, characterised in that the bearing means (18) are formed as a hollow axis.

17. Grinding machine according to one of the preceding claims, characterised in that the work piece support (44) is mounted on a bearing element (39) to be displaceable along a fourth axis (+ x') at right angles to the first (- y) and the second (- z) axis on the machine bench (2).

18. Grinding machine according to Claim 17, characterised in that the work piece support (44) is mounted on the bearing element (39) by means of a revolving table (40) defining a fifth vertical axis (+ V').

19. Grinding machine according to Claim 17 or 18, characterised in that the work piece support (44) is mounted on the bearing element (39) by means of a cross slide (41) defining a sixth and a seventh axis (+ U'; + V') standing at right angles to one another.

20. Grinding machine according to one of the preceding claims, characterised in that the work piece support (44) has a work piece clamping device (45), which is rotatable around an eighth axis (+ B), the work piece rotational axis.

21. Grinding machine according to one of the preceding claims, characterised in that the grinding spindle support (20) is mounted on the bridge (11) via a support (15), which bears a displaceable cradle (16), through which a second axis (- Z) is defined and which has bearing means (200) for the grinding spindle support (20), on which the grinding spindle support is mounted to swivel around a further axis (+ E), which preferably runs parallel to the second axis (- Z).

## Revendications

1. Rectifieuse à commande numérique pour rectifier des pièces, de préférence métalliques, notamment des outils, avec un banc de machine, avec une tête porte-meules qui présente au moins une broche porte-meule entraînée, portant à son extrémité au moins une meule et qui peut être déplacée par rapport au banc de machine au moins suivant deux axes mutuellement perpendiculaires grâce à des moyens associés de paliers et de guidage, et avec un porte-pièce qui est disposé sur le banc de machine dans la zone d'action de la (des) meule(s) du porte-meules, des moyens de réglage commandés par programme qui transmettent au support de broche porte-meule et/ou au porte-pièce des mouvements de réglage sous la forme de déplacements longitudinaux par rapport aux différents axes étant associés au support de broche porte-meule et/ou porte-pièce, un portique (9) avec deux montants (10) latéraux et une traverse (11) horizontale qui s'étend à distance au-dessus du banc de machine (2) et sur laquelle le support de broche porte-meule (20) peut être déplacé suivant un premier axe (-y) étant lié fermement au banc de machine (2) et le banc de machine (2) faisant saillie d'un seul côté par rapport au portique (9), caractérisée par le fait qu'une paroi arrière (13) fermée de rigidification est disposée entre les deux montants (10) de manière à former un portique rigide en torsion et par le fait que le porte-pièce (44) est monté avec possibilité de déplacement suivant au moins un axe (+X').

2. Rectifieuse selon la revendication 1, caractérisée par le fait que la tête porte-meules peut pivoter autour d'au moins un axe.

3. Rectifieuse selon la revendication 1, caractérisée par le fait que les deux montants (10) sont disposés dans la région de deux côtés en vis-à-vis du banc de machine (2).

4. Rectifieuse selon la revendication 1 ou 3, caractérisée par le fait que les deux montants (10) sont supportés côté frontal en saillie du banc de machine (2).

5. Rectifieuse selon la revendication 4, caractérisée par le fait que la paroi arrière (13) est également liée rigidement au banc de machine (2).

6. Rectifieuse selon une des revendications précédentes, caractérisée par le fait que le banc de machine (2), côté frontal en saillie a essentiellement une forme de partie de cercle.

7. Rectifieuse selon une des revendications précédentes, caractérisée par le fait qu'elle comporte un capot (50) qui couvre au moins le support de broche porte-meule (20) et le porte-pièce (44), est lié au banc de machine (2) et/ou au portique (9) et s'étend au-dessus du banc de machine (2).

8. Rectifieuse selon la revendication 6, caractérisée par le fait que le capot (50) est étanche vis-à-vis du banc de machine (2) et/ou du portique (9).

9. Rectifieuse selon la revendication 6 ou 7, caractérisée par le fait que le capot (50) est essentiellement conformé en cloche ou en partie de cylindre.

10. Rectifieuse selon une des revendications précédentes, caractérisée par le fait que des conduites (34) d'alimentation en énergie et/ou en lubrifiant et/ou en agent de refroidissement pour le support de broche porte-meule (20) et l'entraînement de la broche sont logées dans le portique (9).

11. Rectifieuse selon une des revendications précédentes, caractérisée par le fait que le support de broche porte-meule (20) porte au moins un moteur d'entraînement (27) qui est couplé à au moins une broche porte-meule (22) par l'intermédiaire d'un système de courroies (30, 31, 32) et par le fait que le système de courroies est disposé dans une carrosserie fermée, à l'intérieur de laquelle une surpression d'air par rapport à l'environnement peut être maintenue.

12. Rectifieuse selon la revendication 10, caractérisée par le fait que le système de courroies est couplé à la broche porte-meule (22) supportée des deux côtés entre les deux paliers de celle-ci.

13. Rectifieuse selon une des revendications précédentes, caractérisée par le fait que le support de broche porte-meule (20) est monté sur la traverse (11) par l'intermédiaire d'un support (15) qui porte un chariot (16) mobile, par lequel un deuxième axe (-z) est défini et qui présente des moyens de paliers (18, 19) pour le support de broche porte-meule (20) qui définissent un troisième axe (+A), de préférence perpendiculaire au premier axe (-y) et au deuxième axe (-z) en direction du côté frontal en saillie du banc de machine (2), et dans lesquels le support de broche porte-meule est monté pivotant autour du troisième axe (+A).

14. Rectifieuse selon la revendication 13, caractérisée par le fait qu'au moins une broche porte-meule (22) coupe le troisième axe (+A) avec son axe de broche (32).

15. Rectifieuse selon la revendication 13 ou 14, caractérisée par le fait qu'au moins une broche porte-meule (22) est disposée avec son axe de broche (32) distant du troisième axe (+A).

16. Rectifieuse selon la revendication 13, caractérisée par le fait que les moyens de palier (18) son agencés sous forme d'axe creux.

17. Rectifieuse selon une des revendications précédentes, caractérisée par le fait que le porte-pièce (44) est monté sur le banc de machine (2), sur un élément formant palier (39) autorisant le déplacement suivant un quatrième axe (+x'), perpendiculairement au premier axe (-y) et au deuxième axe (-z).

18. Rectifieuse selon la revendication 17, caractérisée par le fait que le porte-pièce (44) est monté sur l'élément formant palier (39) par l'intermédiaire d'un plateau tournant (40) qui définit un cinquième axe (+V') vertical.

19. Rectifieuse selon la revendication 17 ou 18, caractérisée par le fait que le porte-pièce (44) est monté sur l'élément formant palier (39) par l'intermédiaire d'un chariot (41) à deux mouvements rectangulaires qui définit des sixième et septième axes (+U', +V') mutuellement perpendiculaires.

20. Rectifieuse selon une des revendications précédentes, caractérisée par le fait que le porte-pièce (44) comporte un dispositif de serrage de pièce (45) qui peut tourner autour d'un huitième axe (+B), l'axe de rotation de la pièce.

21. Rectifieuse selon une des revendications précédentes, caractérisée par le fait que le support de broche porte-meule (20) est monté sur la traverse (11) par l'intermédiaire d'un support (15) qui porte un chariot (16) mobile par lequel est défini un deuxième axe (-Z) et qui présente des moyens de palier (200) pour le support de broche porte-meule (20) dans lesquels ledit support de broche porte-meule est monté pivotant autour d'un axe (+E) supplémentaire de préférence parallèle au deuxième axe (-Z).
